# EUROPEAN PATENT SPECIFICATION

(11) **EP 2 257 036 B1**
(45) Date of publication and mention of the grant of the patent: **26.04.2017**
(21) Application number: 09011679.9
(22) Date of filing: 11.09.2009
(51) Int. Cl.: H04W 52/02, H04M 1/725

(54) **Portable electronic apparatus capable of operating as a wireless communication product and method thereof**
Tragbares elektronisches Gerät, das als ein drahtloses Kommunikationsprodukt betrieben werden kann, und zugehöriges Verfahren
Appareil électronique portable capable d'être utilisé comme un produit de communication sans fil et son procédé

(30) Priority: 07.05.2009 TW 98115131; 10.08.2009 US 538856
(43) Date of publication of application: 01.12.2010
(73) Proprietor: HTC Corporation, Taoyuan City 330 (TW)
(72) Inventor: Chu, Shih-Hung, Taoyuan City Taoyuan County 330 (TW); Liang, Yu-Hsin, Taoyuan City Taoyuan County 330 (TW)
(74) Representative: Emde, Eric

(56) References cited:
- EP-A- 1 473 951
- US-A1- 2002 081 993

## Description

### Background of the Invention

### 1. Field of the Invention

The present invention relates to a portable electronic apparatus (e.g. a mobile phone) capable of operating as a wireless communication product (e.g. a wireless LAN card), and more particularly, to a portable electronic apparatus which is able to directly use a wireless communication function (e.g. wireless Internet access) offered by the portable electronic apparatus without using processes of its CPU. The present invention also encompasses corresponding methods.

### 2. Description of the Prior Art

With the evolution of mobile communication technology, a utility rate of a mobile communication device is getting higher and higher, and the chance of utilizing a mobile phone to connect to the Internet is also increasing. Therefore, in any place with wireless Internet access, a user can enjoy wireless communication services, such as browsing the Internet, checking Email, looking up parking information, watching WebTV, etc through a mobile phone at any time.

At present, equipments such as a notebook computer or a desktop computer are able to connect to a mobile phone to access wireless Internet via a connection interface, such as universal serial bus (USB), infrared rays (IR), or blue-tooth. However, because the data transmission path of connecting the notebook computer to a wireless module of the mobile phone is too long, and the central processing unit as well as operating system of the mobile phone are required for data processing and format conversion, it will slow down the overall processing speed and result in a poor performance. In addition, when the notebook computer accesses wireless Internet through the mobile phone, it must continuously communicate with the components of the mobile phone, such as the central processing unit, memory, and wireless module, and access data between them. Actually, these actions are quite power-consuming.
EP-A-1 473 951 discloses a method for controlling the power saving properties in a terminal, which utilises cellular phone technology and short range radio frequency wireless communication features in order to increase the operative life of the batteries, and a terminal utilising the method. In this method, the activity state of the short range wireless communication utilisation in the terminal determines the level of the short range wireless communication power save mode.

### Summary of the Invention

It is one of the objectives of the claimed invention to provide a portable electronic apparatus capable of operating as a wireless communication product, and a related method, to solve the abovementioned problems.

According to one embodiment, a portable electronic apparatus capable of operating as a wireless communication product is provided. The portable electronic apparatus consists of a wireless module, a micro processing unit, a determining circuit, and a control circuit. The wireless module provides a wireless communication function. The micro processing unit consists of a first controller and a second controller. The first controller controls operations of the portable electronic apparatus and provides a data access function. The second controller controls operations of the wireless module. When a designated device is coupled to the portable electronic apparatus, the determining circuit determines whether to use the wireless communication function and whether to use the data access function. The control circuit is coupled to the determining circuit and selects to connect a transmission interface of the first controller or a transmission interface of the wireless module to the designated device according to the result provided by the determining circuit. The wireless communication product can be a wireless LAN card, and the wireless communication function of the wireless module can be a wireless Internet access function.

According to another embodiment, a method for utilizing a portable electronic apparatus as a wireless communication product is provided. The portable electronic apparatus consists of a wireless module for providing a wireless communication function and a first controller for providing a data access function. The method includes the following steps: when a designated device is coupled to the portable electronic apparatus, determining whether the designated device uses the wireless communication function and whether the designated device uses the data access function; and selecting to connect a transmission interface of the first controller or a transmission interface of the wireless module to the designated device according to the result of the determining step. When the result of the determining step indicates that the designated device chooses to use the wireless communication function without using the data access function, the transmission interface of the wireless module is connected to the designated device.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of the appearance of a portable electronic apparatus capable of operating as a wireless communication product.
FIG. 2 is a block diagram of the portable electronic apparatus shown in FIG.1 according to a first embodiment of the present invention.
FIG. 3 is a block diagram of the portable electronic apparatus shown in FIG.1 according to a second embodiment of the present invention.
FIG.4 is flowchart illustrating a method for utilizing a portable electronic apparatus as a wireless communication product, according to an exemplary embodiment of the present invention.
FIG.5 is flowchart illustrating a method for utilizing a portable electronic apparatus as a wireless communication product according to another exemplary embodiment of the present invention.

### Detailed Description

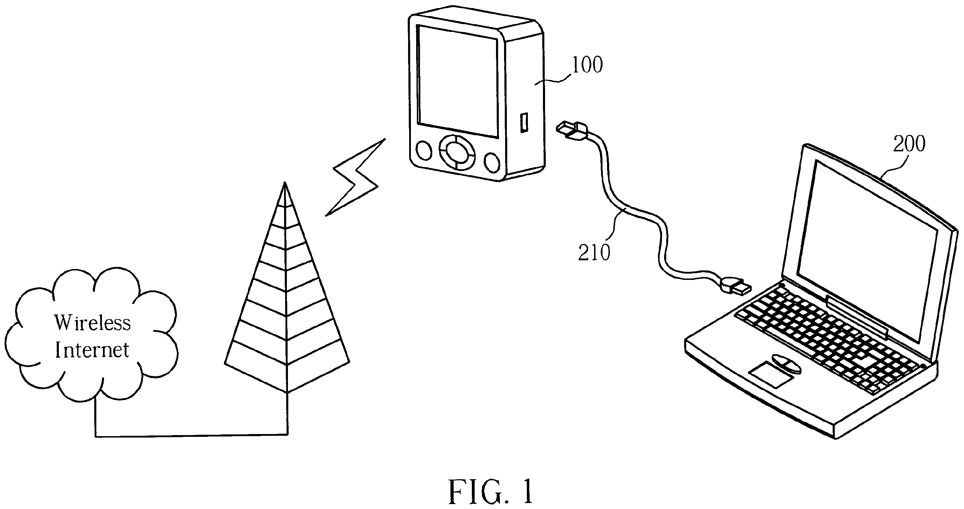

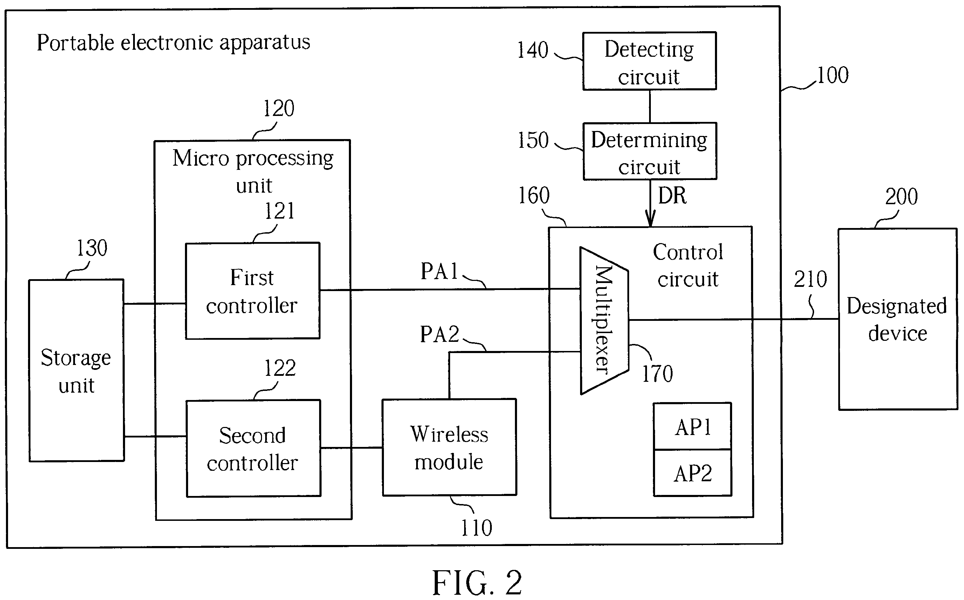

Please refer to FIG. 1 together with FIG. 2. FIG.1 is a schematic diagram of the appearance of a portable electronic apparatus 100 capable of operating as a wireless communication product, and FIG. 2 is a block diagram of the portable electronic apparatus 100 shown in FIG.1 according to a first embodiment of the present invention. In this embodiment, the portable electronic apparatus 100 can be a mobile phone or a personal digital assistant (PDA), but the present invention is not limited to this only and can be portable electronic apparatuses of other types. As shown in FIG.1, a designated device 200 is coupled to the portable electronic apparatus 100 via a connection interface 210, such as infrared rays (IR), blue-tooth, or USB. The designated device 200 can be a notebook computer or a desktop computer, but this should not be considered as limitations of the present invention. When the designated device 200 is coupled to the portable electronic apparatus 100, it can determine whether to use a data access function and/or a wireless communication function offered by the portable electronic apparatus 100 so as to proceed with a synchronous data transmission between the portable electronic apparatus 100 and the designated device 200, or access a wireless Internet via the portable electronic apparatus 100.

As shown in FIG.2, the portable electronic apparatus 100 consists of, but is not limited to, a wireless module 110, a micro processing unit 120, a storage unit 130, a detecting circuit 140, a determining circuit 150, and a control circuit 160. The wireless module 110 provides a wireless communication function, such as a wireless Internet access function. The micro processing unit 120 consists of a first controller 121 and a second controller 122. The first controller 121 controls operations of the portable electronic apparatus 100 and provides a data access function, and the second controller 122 controls operations of the wireless module 110. The storage unit 130 (e.g. a memory) is coupled to the first controller 121 and the second controller 122 for providing memory spaces of data access.

The detecting circuit 140 is coupled to the determining circuit 150, and it detects whether the portable electronic apparatus 100 is coupled to the designated device 200. When the detecting circuit 140 detects that the portable electronic apparatus 100 is coupled to the designated device 200, the determining circuit 150 determines whether the designated device 200 uses the wireless communication function and whether the designated device 200 uses the data access function providing a result DR. The control circuit 160 is coupled to the determining circuit 150 for selecting to connect a transmission interface of the first controller 121 or a transmission interface of the wireless module 110 to the designated device 200 according to the result DR.

Please note that when the control circuit 160 connects the transmission interface of the wireless module 110 to the designated device 200, the portable electronic apparatus 100 can operate as a wireless communication product. The wireless communication product can be a wireless LAN card, and the wireless communication function of the wireless module 110 can be a wireless Internet access function. However, those skilled in the art should appreciate that this should not be considered as a limitation of the present invention.

In the following description, several examples are taken for illustrating how the control circuit 160 operates. In a first condition, when the result DR of the determining circuit 150 indicates that the designated device 200 chooses to use the wireless communication function without using the data access function, the control circuit 160 connects the transmission interface of the wireless module 110 to the designated device 200. That is, a second path PA2 and the connection interface 210 are connected. In a second condition, when the result DR indicates that the designated device 200 chooses to use the data access function without using the wireless communication function, the control circuit 160 connects the transmission interface of the first controller 121 to the designated device 200. That is, a first path PA1 and the connection interface 210 are connected. In a third condition, when the result DR indicates that the designated device 200 chooses to use the wireless communication function together with the data access function simultaneously, the control circuit 160 connects the transmission interface of the first controller 121 to the designated device 200. In other words, the first path PA1 and the connection interface 210 are connected.

It should be noted that because the micro processing unit 120 of the portable electronic apparatus 100 is a power-consuming element, the control circuit 160 can control the micro processing unit 120 to enter a power-saving mode (such as a stand-by mode) to save power consumption when the designated device 200 chooses to use the wireless communication function without using the data access function. Furthermore, when the designated device 200 chooses to use the data access function without using the wireless communication function, the micro processing unit 120 is required for accessing data from the storage unit 130. Similarly, when the designated device 200 chooses to use the wireless communication function together with the data access function simultaneously, the micro processing unit 120 is also required for accessing data from the storage unit 130 and for controlling operations of the wireless module 110.

In addition, if the wireless module 110 is in different modes or on different transmission paths, the designated device 200 must switch different drivers and firmware of the wireless module 110 in order to use the wireless communication function offered by the wireless module 110. For example, when the designated device 200 chooses to use the wireless communication function together with the data access function simultaneously (i.e. the connection interface 210 is connected to the transmission interface of the first controller 121), the control circuit 160 performs a first designated application program AP1 to select the original drivers and firmware of the wireless module 110; and when the designated device chooses to use the wireless communication function without using the data access function (i.e. the connection interface 210 is directly connected to the transmission interface of the wireless module 110), the control circuit 160 performs a second designated application program AP2 to switch the drivers and firmware of the wireless module 110. Therefore, the designated device 200 is able to directly use the wireless communication function (e.g. the wireless Internet access function) offered by the wireless module 110 without processes of the micro processing unit 120.

The abovementioned embodiments are presented merely for illustrating applications of the present invention, and in no way should be considered to be limitations of the scope of the present invention. Those skilled in the art should appreciate that various modifications of the portable electronic apparatus 100 may be made without departing from the scope of the present invention as defined by the appended claims. Moreover, the detecting circuit 140 and the determining circuit 150 are optional elements, and can be omitted or can be replaced by other elements that can achieve the same goal. For example, the user can directly select to switch different modes of the portable electronic apparatus 100 so as to determine whether to use the wireless communication function and/or the data access function. At this time, the determining circuit 150 is replaced by the selection of the user.

In the aforementioned embodiments, the control circuit 160 can consist of a multiplexer 170, and thus the control circuit 160 can select to connect the transmission interface of the first controller 121 or the transmission interface of the wireless module 110 to the designated device 200 via the multiplexer 170. In other words, the control circuit 160 performs a switching operation upon the first path PA1 and the second path PA2 by using the multiplexer 170. This is merely an example for illustrating the present invention, and in no way should be considered to be limitations of the scope of the present invention. Those skilled in the art should appreciate that various modifications of the control circuit 160 may be made without departing from the scope of the present invention as defined by the appended claims.

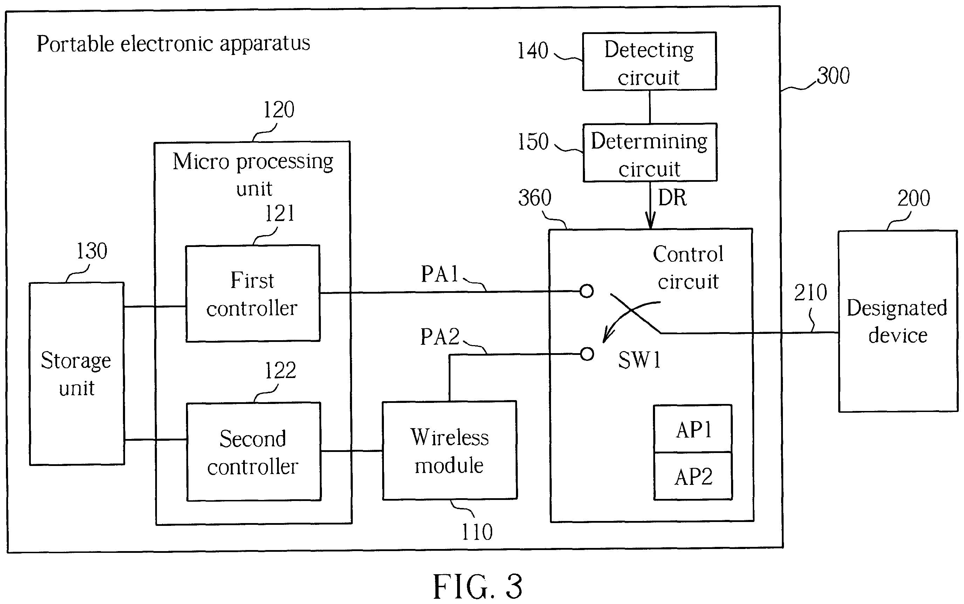

Please refer to FIG. 3. FIG. 3 is a block diagram of the portable electronic apparatus shown in FIG.1 according to a second embodiment of the present invention. In FIG.3, the architecture of the portable electronic apparatus 300 is similar to that of the portable electronic apparatus 100 shown in FIG. 2, and the difference between them is that a control circuit 360 of the portable electronic apparatus 300 consists of a switch SW1. The control circuit 360 can perform a switching operation upon the first path PA1 and the second path PA2 by using the switch SW1 so as to select to connect the transmission interface of the first controller 121 or the transmission interface of the wireless module 110 to the designated device 200.

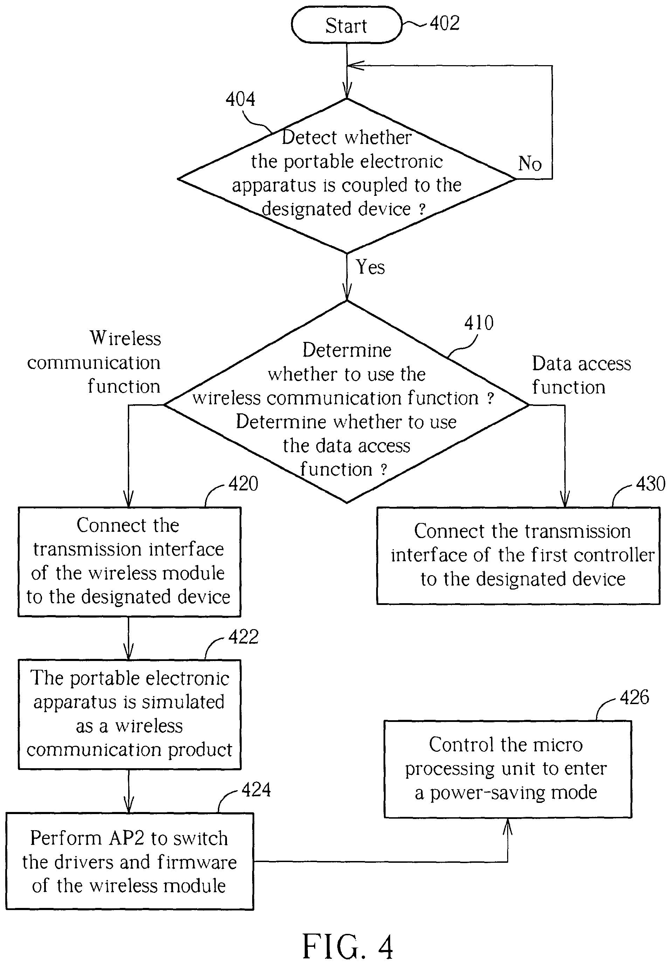

Please refer to FIG. 4. FIG. 4 is flowchart illustrating a method for utilizing a portable electronic apparatus as a wireless communication product, according to an exemplary embodiment of the present invention. Please note that the following steps are not limited to be performed according to the exact sequence shown in FIG. 4 if a roughly identical result can be obtained. The method includes, but is not limited to, the following steps:
Step 402: Start.
Step 404: Detect whether the portable electronic apparatus is coupled to the designated device. When the portable electronic apparatus is coupled to the designated device, go to Step 410; otherwise, go back to Step 404.
Step 410: Determine whether to use the wireless communication function and whether to use the data access function to generate a determining result. When the determining result indicates that the designated device chooses to use the wireless communication function without using the data access function, go to Step 420; and when the determining result indicates that the designated device chooses to use the data access function without using the wireless communication function, go to Step 430.
Step 420: Connect the transmission interface of the wireless module to the designated device. After that, go to Step 422.
Step 422: The portable electronic apparatus simulates a wireless communication product. After that, go to Step 424.
Step 424: Perform a second designated application program to switch the drivers and firmware of the wireless module. After that, go to Step 426.
Step 426: Control the micro processing unit to enter a power-saving mode.
Step 430: Connect the transmission interface of the first controller to the designated device.

How each element operates can be known by collocating the steps shown in FIG.4 together with the elements shown in FIG.2 or FIG.3. And further description of the steps shown in FIG.4 is omitted here for brevity. The step 404 is executed by the detecting circuit 140, the step 410 is executed by the determining circuit 150, and the steps 420-430 are executed by the control circuit 160 or 360. Be noted that the control circuit 160/360 can selectively switch paths, i.e. connecting the transmission interface of the first controller 121 or the transmission interface of the wireless module 110 to the designated device 200, depending on whether to use the wireless communication function and whether to use the data access function.

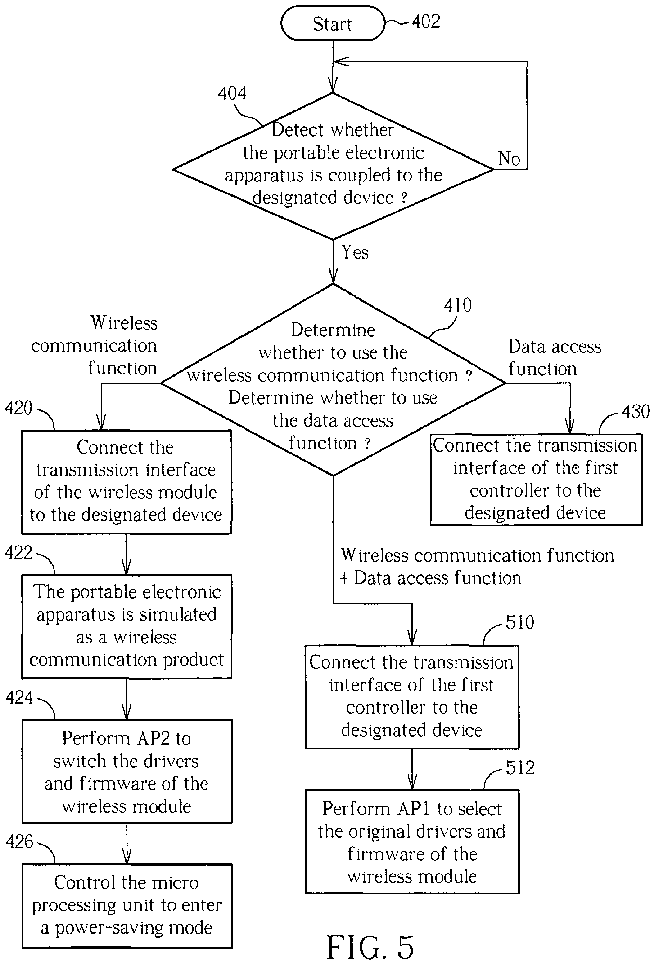

Please refer to FIG. 5. FIG. 5 is flowchart illustrating a method for utilizing a portable electronic apparatus as a wireless communication product according to another exemplary embodiment of the present invention. The method includes, but is not limited to, the following steps:
Step 402: Start.
Step 404: Detect whether the portable electronic apparatus is coupled to the designated device. When the portable electronic apparatus is coupled to the designated device, go to Step 410; otherwise, go back to Step 404.
Step 410: Determine whether to use the wireless communication function and whether to use the data access function to generate a determining result. When the determining result indicates that the designated device chooses to use the wireless communication function without using the data access function, go to Step 420; when the determining result indicates that the designated device chooses to use the data access function without using the wireless communication function, go to Step 430; and when the determining result indicates that the designated device chooses to use the data access function together with the wireless communication function simultaneously, go to Step 510.
Step 420: Connect the transmission interface of the wireless module to the designated device. After that, go to Step 422.
Step 422: The portable electronic apparatus simulates a wireless communication product. After that, go to Step 424.
Step 424: Perform a second designated application program to switch the drivers and firmware of the wireless module. After that, go to Step 426.
Step 426: Control the micro processing unit to enter a power-saving mode.
Step 430: Connect the transmission interface of the first controller to the designated device.
Step 510: Connect the transmission interface of the first controller to the designated device. After that, go to Step 512.
Step 512: Perform a first designated application program to select the original drivers and firmware of the wireless module.

Please note that the steps shown in FIG.5 are similar to the steps shown in FIG.4, which is a varied embodiment of FIG.4. The difference between them is that the flowchart shown in FIG.5 further consists of a third condition- a condition that the designated device chooses to use the data access function together with the wireless communication function simultaneously (i.e. the steps 510 and 512). How each element operates can be known by collocating the steps shown in FIG.5 together with the elements shown in FIG.2 or FIG.3. And further description of the steps shown in FIG.5 is omitted here for brevity. The steps 510 and 512 are executed by the control circuit 160 or 360.

Please note that the steps of the abovementioned flowcharts are merely exemplary embodiments of the present invention, and in no way should be considered to be limitations of the scope of the present invention which is defined by the appended claims. These methods can include other intermediate steps or can merge several steps into a single step without departing from the scope of the present invention as defined by the appended claims.

The abovementioned embodiments are presented merely for describing features of the present invention, and in no way should be considered to be limitations of the scope of the present invention which is defined by the appended claims. In summary, the present invention provides a portable electronic apparatus (e.g. a mobile phone or a PDA) capable of operating as a wireless communication product (e.g. a wireless LAN card), and method thereof. By adding the control circuit (such as a multiplexer or a switch) to switch paths/modes, the transmission interface of the first controller or the transmission interface of the wireless module can be selectively connected to the designated device (such as a desktop computer or a notebook computer) . As a result, when the designated device chooses to use the wireless communication function without using the data access function, it is able to directly use wireless communication function (such as a wireless Internet access function) offered by the wireless module without processes of the micro processing unit of the portable electronic apparatus. Therefore, the efficiency of wireless Internet access can be improved so as to approximate to the simulation of the wireless LAN card. Moreover, when the designated device chooses to separately use the wireless communication function without using the data access function, the micro processing unit can be further controlled to enter a power-saving mode (e. g. a stand-by mode) to save power consumption of the portable electronic apparatus.

## Claims

1. A portable electronic apparatus (100) capable of operating as a wireless communication product, comprising:
a wireless module (110), for providing a wireless communication function;
a micro processing unit (120), comprising:
a first controller (121), for controlling operations of the portable electronic apparatus (100) and for providing a data access function; and
a second controller (122), for controlling operations of the wireless module (110);
a determining circuit (150), for determining whether to use the wireless communication function and whether to use the data access function when a designated device (200) is coupled to the portable electronic apparatus (100); and
a control circuit (160), coupled to the determining circuit (150), for selecting to connect a transmission interface of the first controller (121) or a transmission interface of the wireless module (110) to the designated device (200) according to the result provided by the determining circuit (150).

2. The portable electronic apparatus of claim 1, wherein when the control circuit (160) connects the transmission interface of the wireless module (110) to the designated device (200), the portable electronic apparatus (100) is configured to simulate a wireless LAN card.

3. The portable electronic apparatus of claim 1, wherein:
when the result provided by the determining circuit (150) indicates that the designated device (200) chooses to use the wireless communication function without using the data access function, the control circuit (160) is configured to connect the transmission interface of the wireless module (110) to the designated device (200);
when the result provided by the determining circuit (150) indicates that the designated device (200) chooses to use the data access function without using the wireless communication function, the control circuit (160) is configured to connect the transmission interface of the first controller (121) to the designated device (200); and
when the result provided by the determining circuit (150) indicates that the designated device (200) chooses to use the wireless communication function together with the data access function simultaneously, the control circuit (160) is configured to connect the transmission interface of the first controller (121) to the designated device (200).

4. The portable electronic apparatus of claim 3, wherein the control circuit (160) is further configured to:
perform a designated application program to switch drivers and firmware of the wireless module (110) when the result provided by the determining circuit (150) indicates that the designated device (200) chooses to use the wireless communication function without using the data access function.

5. The portable electronic apparatus of claim 3, wherein the control circuit (160) is further configured to:
control the micro processing unit (120) to enter a power-saving mode when the result provided by the determining circuit (150) indicates that the designated device (200) chooses to use the wireless communication function without using the data access function.

6. The portable electronic apparatus of claim 1, wherein the control circuit (160) comprises a multiplexer or a switch.

7. The portable electronic apparatus of claim 1, further comprising:
a detecting circuit (140), coupled to the determining circuit (150), for detecting whether the portable electronic apparatus (100) is coupled to the designated device (200);
wherein when the detecting circuit (140) detects that the portable electronic apparatus (100) is coupled to the designated device (200), the determining circuit (140) is configured to determine whether the designated device (200) uses the wireless communication function and whether the designated device (200) uses the data access function.

8. The portable electronic apparatus of claim 1, wherein the wireless communication product is a wireless LAN card, and the wireless communication function of the wireless module is a wireless Internet access function.

9. A method for utilizing a portable electronic apparatus (100) as a wireless communication product, the portable electronic apparatus (100) comprising a wireless module (110) for providing a wireless communication function and a first controller (121) for providing a data access function, the method comprising:
when a designated device (200) is coupled to the portable electronic apparatus (100), determining whether to use the wireless communication function and whether to use the data access function; and
selecting to connect a transmission interface of the first controller (121) or a transmission interface of the wireless module (110) to the designated device (200) according to the result of the determining step.

10. The method of claim 9, wherein when the transmission interface of the wireless module (110) is coupled to the designated device (200), the portable electronic apparatus (100) simulates a wireless LAN card.

11. The method of claim 9, wherein the step of selecting to connect the transmission interface of the first controller (121) or the transmission interface of the wireless module (110) to the designated device (200) according to the result of the determining step comprises:
when the result of the determining step indicates that the designated device (200) chooses to use the wireless communication function without using the data access function, connecting the transmission interface of the wireless module (110) to the designated device (200);
when the result of the determining step indicates that the designated device (200) chooses to use the data access function without using the wireless communication function, connecting the transmission interface of the first controller (121) to the designated device (200); and
when the result of the determining step indicates that the designated device (200) chooses to use the wireless communication function together with the data access function simultaneously, connecting the transmission interface of the first controller (121) to the designated device.

12. The method of claim 11, further comprising:
performing a designated application program to switch drivers and firmware of the wireless module (110) when the result of the determining step indicates that the designated device (200) chooses to use the wireless communication function without using the data access function.

13. The method of claim 11, further comprising:
controlling a micro processing unit (120) to enter a power-saving mode when the result of the determining step indicates that the designated device (200) chooses to use the wireless communication function without using the data access function.

14. The method of claim 9, further comprising:
detecting whether the portable electronic apparatus (100) is coupled to the designated device (200).

15. The method of claim 9, wherein the wireless communication product is a wireless LAN card, and the wireless communication function of the wireless module is a wireless Internet access function.

## Patentansprüche

1. Tragbare, elektronische Vorrichtung (100), die imstande ist als ein drahtloses Kommunikationsprodukt betrieben zu werden, die Folgendes aufweist:
ein Drahtlosmodul (110) zum Vorsehen einer Drahtloskommunikationsfunktion;
eine Mikroverarbeitungseinheit (120), die Folgendes aufweist:
eine erste Steuervorrichtung (121) zum Steuern der Betriebsfunktionen der tragbaren, elektronischen Vorrichtung (100) und zum Vorsehen einer Datenzugriffsfunktion; und
eine zweite Steuervorrichtung (122) zum Steuern der Betriebsfunktionen des Drahtlosmoduls (110);
eine Bestimmungsschaltung (150) zum Bestimmen, ob die Drahtloskommunikationsfunktion zu verwenden ist und ob die Datenzugriffsfunktion zu verwenden ist, wenn eine zugewiesene Vorrichtung (200) mit der tragbaren, elektronischen Vorrichtung (100) gekoppelt wird; und
eine Steuerschaltung (160), die mit der Bestimmungsschaltung (150) gekoppelt ist, um auszuwählen, ob eine Übertragungsschnittstelle der ersten Steuervorrichtung (121) oder eine Übertragungsschnittstelle des Drahtlosmoduls (110) mit der zugewiesenen Vorrichtung (200) zu verbinden ist, und zwar gemäß dem durch die Bestimmungsschaltung (150) vorgesehenen Ergebnis.

2. Tragbare, elektronische Vorrichtung gemäß Anspruch 1, wobei wenn die Steuerschaltung (160) die Übertragungsschnittstelle des Drahtlosmoduls (110) mit der zugewiesenen Vorrichtung (200) verbindet, die tragbare, elektronische Vorrichtung (100) so konfiguriert ist, dass sie eine WLAN-Karte simuliert.

3. Tragbare, elektronische Vorrichtung gemäß Anspruch 1, wobei:
wenn das durch die Bestimmungsschaltung (150) vorgesehene Ergebnis anzeigt, dass die zugewiesene Vorrichtung (200) die Verwendung der Drahtloskommunikationsfunktion ohne die Verwendung der Datenzugriffsfunktion auswählt, die Steuerschaltung (160) so konfiguriert ist, dass sie die Übertragungsschnittstelle des Drahtlosmoduls (110) mit der zugewiesenen Vorrichtung (200) verbindet;
wenn das durch die Bestimmungsschaltung (150) vorgesehene Ergebnis anzeigt, dass die zugewiesene Vorrichtung (200) die Verwendung der Datenzugriffsfunktion ohne die Verwendung der Drahtloskommunikationsfunktion auswählt, die Steuerschaltung (160) so konfiguriert ist, dass sie die Übertragungsschnittstelle der ersten Steuervorrichtung (121) mit der zugewiesenen Vorrichtung (200) verbindet; und
wenn das durch die Bestimmungsschaltung (150) vorgesehene Ergebnis anzeigt, dass die zugewiesene Vorrichtung (200) die Verwendung der Drahtlosfunktion in simultaner Weise gemeinsam mit der Datenzugriffsfunktion verwendet, die Steuerschaltung (160) so konfiguriert ist, dass sie die Übertragungsschnittstelle der ersten Steuervorrichtung (121) mit der zugewiesenen Vorrichtung (200) verbindet.

4. Tragbare, elektronische Vorrichtung gemäß Anspruch 3, wobei die Steuervorrichtung (160) ferner konfiguriert ist, um:
ein zugewiesenes Anwendungsprogramm auszuführen, um Treiber und Firmware des Drahtlosmoduls (110) zu schalten, wenn das durch die Bestimmungsschaltung (150) vorgesehene Ergebnis anzeigt, dass die zugewiesene Vorrichtung (200) die Verwendung der Drahtloskommunikationsfunktion ohne die Verwendung der Datenzugriffsfunktion auswählt.

5. Tragbare, elektronische Vorrichtung gemäß Anspruch 3, wobei die Steuervorrichtung (160) ferner konfiguriert ist, um:
die Mikroverarbeitungseinheit (120) zu steuern, in einen Stromsparmodus einzutreten, wenn das durch die Bestimmungsschaltung (150) vorgesehene Ergebnis anzeigt, dass die zugewiesene Vorrichtung (200) die Verwendung der Drahtloskommunikationsfunktion ohne Verwendung der Datenzugriffsfunktion auswählt.

6. Tragbare, elektronische Vorrichtung gemäß Anspruch 1, wobei die Steuerschaltung (160) einen Multiplexer oder einen Schalter aufweist.

7. Tragbare, elektronische Vorrichtung gemäß Anspruch 1, die ferner Folgendes aufweist:
eine Detektionsschaltung (140), die mit der Bestimmungsschaltung (150) gekoppelt ist, um zu bestimmen, ob die tragbare, elektronische Vorrichtung (100) mit der zugewiesenen Vorrichtung (200) gekoppelt ist;
wobei wenn die Detektionsschaltung (140) detektiert, dass die tragbare, elektronische Vorrichtung (100) mit der zugewiesenen Vorrichtung (200) gekoppelt ist, die Bestimmungsschaltung (140) konfiguriert ist, um zu bestimmen, ob die zugewiesene Vorrichtung (200) die Drahtloskommunikationsfunktion verwendet und ob die zugewiesene Vorrichtung (200) die Datenzugriffsfunktion verwendet.

8. Tragbare, elektronische Vorrichtung gemäß Anspruch 1, wobei das Drahtloskommunikationsprodukt eine WLAN-Karte ist, und die Drahtloskommunikationsfunktion des Drahtlosmoduls eine drahtlose Internetzugriffsfunktion ist.

9. Verfahren zur Nutzung einer tragbaren, elektronischen Vorrichtung (100) als ein Drahtloskommunikationsprodukt, wobei die tragbare, elektronische Vorrichtung (100) ein Drahtlosmodul (110) zum Vorsehen einer Drahtloskommunikationsfunktion und eine erste Steuervorrichtung (121) zum Vorsehen einer Datenzugriffsfunktion aufweist, wobei das Verfahren Folgendes aufweist:
wenn eine zugewiesene Vorrichtung (200) mit der tragbaren, elektronischen Vorrichtung (100) gekoppelt ist, Bestimmen über die Verwendung der Drahtloskommunikationsfunktion und über die Verwendung der Datenzugriffsfunktion; und
Auswählen einer Verbindung einer Übertragungsschnittstelle der ersten Steuervorrichtung (121) oder einer Übertragungsschnittstelle des Drahtlosmoduls (110) mit der zugewiesenen Vorrichtung (200) gemäß dem Ergebnis des Bestimmungsschritts.

10. Verfahren gemäß Anspruch 9, wobei wenn die Übertragungsschnittstelle des Drahtlosmoduls (110) mit der zugewiesenen Vorrichtung (200) gekoppelt ist, die tragbare, elektronische Vorrichtung (100) eine WLAN-Karte simuliert.

11. Verfahren gemäß Anspruch 9, wobei der Schritt des Auswählens der Verbindung der Übertragungsschnittstelle der ersten Steuervorrichtung (121) oder der Übertragungsschnittstelle des Drahtlosmoduls (110) mit der zugewiesenen Vorrichtung (200) gemäß dem Ergebnis des Bestimmungsschritts Folgendes aufweist:
wenn das Ergebnis des Bestimmungsschritts anzeigt, dass die zugewiesene Vorrichtung (200) die Verwendung der Drahtloskommunikationsfunktion ohne Verwendung der Datenzugriffsfunktion auswählt, Verbinden der Übertragungsschnittstelle des Drahtlosmoduls (110) mit der zugewiesenen Vorrichtung (200);
wenn das Ergebnis des Bestimmungsschritts anzeigt, dass die zugewiesene Vorrichtung (200) die Verwendung der Datenzugriffsfunktion ohne Verwendung der Drahtloskommunikationsfunktion auswählt, Verbinden der Übertragungsschnittstelle der ersten Steuervorrichtung (121) mit der zugewiesenen Vorrichtung (200); und
wenn das Ergebnis des Bestimmungsschritts anzeigt, dass die zugewiesene Vorrichtung (200) die simultane Verwendung der Drahtloskommunikationsfunktion gemeinsam mit der Datenzugriffsfunktion auswählt, Verbinden der Übertragungsschnittstelle der ersten Steuervorrichtung (121) mit der zugewiesenen Vorrichtung (200).

12. Verfahren gemäß Anspruch 11, das ferner Folgendes aufweist:
Ausführen eines zugewiesenen Anwendungsprogramms zum Schalten von Treibern und Firmware des Drahtlosmoduls (110), wenn das Ergebnis des Bestimmungsschritts anzeigt, dass die zugewiesene Vorrichtung (200) die Verwendung der Drahtloskommunikationsfunktion ohne Verwendung der Datenzugriffsfunktion auswählt.

13. Verfahren gemäß Anspruch 11, das ferner Folgendes aufweist:
Steuern einer Mikroverarbeitungseinheit (120), um in einen Stromsparmodus einzutreten, wenn das Ergebnis des Bestimmungsschritts anzeigt, dass die zugewiesene Vorrichtung (200) die Verwendung der Drahtloskommunikationsfunktion ohne Verwendung der Datenzugriffsfunktion auswählt.

14. Verfahren gemäß Anspruch 9, das ferner Folgendes aufweist:
Detektieren, ob die tragbare, elektronische Vorrichtung (100) mit der zugewiesenen Vorrichtung (200) gekoppelt ist.

15. Verfahren gemäß Anspruch 9, wobei das Drahtloskommunikationsprodukt eine WLAN-Karte ist, und die Drahtloskommunikationsfunktion des Drahtlosmoduls eine drahtlose Internetzugriffsfunktion ist.

## Revendications

1. Appareil électronique portable (100) capable de fonctionner en tant que produit de communication sans fil, comprenant :
un module sans fil (110), pour assurer une fonction de communication sans fil ;
un module de micro-traitement (120), comprenant :
un premier contrôleur (121), pour contrôler des opérations de l'appareil électronique portable (100) et pour assurer une fonction d'accès à des données ; et
un deuxième contrôleur (122), pour contrôler des opérations du module sans fil (110) ;
un circuit de détermination (150), pour déterminer s'il faut utiliser la fonction de communication sans fil et s'il faut utiliser la fonction d'accès à des données lorsqu'un dispositif désigné (200) est couplé à l'appareil électronique portable (100) ; et
un circuit de commande (160), couplé au circuit de détermination (150), pour sélectionner de connecter une interface de transmission du premier contrôleur (121) ou une interface de transmission du module sans fil (110) au dispositif désigné (200) en fonction du résultat fourni par le circuit de détermination (150).

2. Appareil électronique portable selon la revendication 1, dans lequel lorsque le circuit de commande (160) connecte l'interface de transmission du module sans fil (110) au dispositif désigné (200), l'appareil électronique portable (100) est agencé pour simuler une carte LAN sans fil.

3. Appareil électronique portable selon la revendication 1, dans lequel :
lorsque le résultat fourni par le circuit de détermination (150) indique que le dispositif désigné (200) choisit d'utiliser la fonction de communication sans fil sans utiliser la fonction d'accès à des données, le circuit de commande (160) est agencé pour connecter l'interface de transmission du module sans fil (110) au dispositif désigné (200) ;
lorsque le résultat fourni par le circuit de détermination (150) indique que le dispositif désigné (200) choisit d'utiliser la fonction d'accès à des données sans utiliser la fonction de communication sans fil, le circuit de commande (160) est agencé pour connecter l'interface de transmission du premier contrôleur (121) au dispositif désigné (200) ; et
lorsque le résultat fourni par le circuit de détermination (150) indique que le dispositif désigné (200) choisit d'utiliser la fonction de communication sans fil conjointement avec la fonction d'accès à des données simultanément, le circuit de commande (160) est agencé pour connecter l'interface de transmission du premier contrôleur (121) au dispositif désigné (200).

4. Appareil électronique portable selon la revendication 3, dans lequel le circuit de commande (160) est en outre agencé pour :
exécuter un programme d'application désigné pour commuter des pilotes et du micro-logiciel du module sans fil (110) lorsque le résultat fourni par le circuit de détermination (150) indique que le dispositif désigné (200) choisit d'utiliser la fonction de communication sans fil sans utiliser la fonction d'accès à des données.

5. Appareil électronique portable selon la revendication 3, dans lequel le circuit de commande (160) est en outre agencé pour :
contrôler le module de micro-traitement (120) pour passer dans un mode d'économie d'énergie lorsque le résultat fourni par le circuit de détermination (150) indique que le dispositif désigné (200) choisit d'utiliser la fonction de communication sans fil sans utiliser la fonction d'accès à des données.

6. Appareil électronique portable selon la revendication 1, dans lequel le circuit de commande (160) comprend un multiplexeur ou un commutateur.

7. Appareil électronique portable selon la revendication 1, comprenant en outre :
un circuit de détection (140), couplé au circuit de détermination (150), pour détecter si l'appareil électronique portable (100) est couplé au dispositif désigné (200) ;
dans lequel lorsque le circuit de détection (140) détecte que l'appareil électronique portable (100) est couplé au dispositif désigné (200), le circuit de détermination (140) est agencé pour déterminer si le dispositif désigné (200) utilise la fonction de communication sans fil et si le dispositif désigné (200) utilise la fonction d'accès à des données.

8. Appareil électronique portable selon la revendication 1, dans lequel le produit de communication sans fil est une carte LAN sans fil, et la fonction de communication sans fil du module sans fil est une fonction d'accès à Internet sans fil.

9. Procédé pour utiliser un appareil électronique portable (100) en tant que produit de communication sans fil, l'appareil électronique portable (100) comprenant un module sans fil (110) pour assurer une fonction de communication sans fil et un premier contrôleur (121) pour assurer une fonction d'accès à des données, le procédé comprenant :
lorsqu'un dispositif désigné (200) est couplé à l'appareil électronique portable (100), déterminer s'il faut utiliser la fonction de communication sans fil et s'il faut utiliser la fonction d'accès à des données ; et
sélectionnerde connecter une interface de transmission du premier contrôleur (121) ou une interface de transmission du module sans fil (110) au dispositif désigné (200) en fonction du résultat de l'étape de détermination.

10. Procédé selon la revendication 9, dans lequel lorsque l'interface de transmission du module sans fil (110) est couplée au dispositif désigné (200), l'appareil électronique portable (100) simule une carte LAN sans fil.

11. Procédé selon la revendication 9, dans lequel l'étape de sélection de connecter l'interface de transmission du premier contrôleur (121) ou l'interface de transmission du module sans fil (110) au dispositif désigné (200) en fonction du résultat de l'étape de détermination comprend :
lorsque le résultat de l'étape de détermination indique que le dispositif désigné (200) choisit d'utiliser la fonction de communication sans fil sans utiliser la fonction d'accès à des données, connecter l'interface de transmission du module sans fil (110) au dispositif désigné (200) ;
lorsque le résultat de l'étape de détermination indique que le dispositif désigné (200) choisit d'utiliser la fonction d'accès à des données sans utiliser la fonction de communication sans fil, connecter l'interface de transmission du premier contrôleur (121) au dispositif désigné (200) ; et
lorsque le résultat de l'étape de détermination indique que le dispositif désigné (200) choisit d'utiliser la fonction de communication sans fil conjointement avec la fonction d'accès à des données simultanément, connecter l'interface de transmission du premier contrôleur (121) au dispositif désigné.

12. Procédé selon la revendication 11, comprenant en outre :
exécuterun programme d'application désigné pour commuter des pilotes et du micro-logiciel du module sans fil (110) lorsque le résultat de l'étape de détermination indique que le dispositif désigné (200) choisit d'utiliser la fonction de communication sans fil sans utiliser la fonction d'accès à des données.

13. Procédé selon la revendication 11, comprenant en outre :
contrôler un module de micro-traitement (120) pour passer dans un mode d'économie d'énergie lorsque le résultat de l'étape de détermination indique que le dispositif désigné (200) choisit d'utiliser la fonction de communication sans fil sans utiliser la fonction d'accès à des données.

14. Procédé selon la revendication 9, comprenant en outre :
détecter si le dispositif électronique portable (100) est couplé au dispositif désigné (200).

15. Procédé selon la revendication 9, dans lequel le produit de communication sans fil est une carte LAN sans fil, et la fonction de communication sans fil du module sans fil est une fonction d'accès à Internet sans fil.
